# EUROPÄISCHE PATENTSCHRIFT

(11) **EP 1 025 600 B1**
(45) Veröffentlichungstag und Bekanntmachung des Hinweises auf die Patenterteilung: **29.12.2004**
(21) Anmeldenummer: 98954383.0
(22) Anmeldetag: 09.10.1998
(51) Int. Cl.: H01M 4/92, C25B 9/00, C01G 55/00, B01J 31/10, B01J 35/00, B01J 37/02, H01M 8/10

(54) **POLYMERSTABILISIERTE METALLKOLLOID-ENHALTENDE KATALYSATOREN, VERFAHREN ZU IHRER HERSTELLUNG UND IHRE VERWENDUNG ALS KATALYSATOREN FÜR BRENNSTOFFZELLEN**
POLYMER-STABILISED METAL COLLOID CONTAINING CATALYSTS, METHOD FOR PRODUCING SAID CATALYSTS AND USE OF THE SAME AS CATALYSTS FOR FUEL CELL
CATALYSATEURS COMPRENNANT COLLOIDALES METALLIFERES STABILISEES PAR POLYMERES, PROCEDE PERMETTANT DE LES PREPARER ET LEUR UTILISATION COMME CATALYSEURS POUR DES PILES A COMBUSTIBLE

(30) Priorität: 17.10.1997 DE 19745904
(43) Veröffentlichungstag der Anmeldung: 09.08.2000
(73) Patentinhaber: Pemeas GmbH, 65926 Frankfurt am Main (DE)
(72) Erfinder: BÖNSEL, Harald, D-65529 Waldems (DE); DECKERS, Gregor, D-65929 Frankfurt (DE); FRANK, Georg, D-72074 Tübingen (DE); MILLAUER, Hans, D-81241 München (DE); SOCZKA-GUTH, Thomas, D-65719 Hofheim (DE)
(74) Vertreter: Luderschmidt, Schüler & Partner GbR
(86) Internationale Anmeldenummer: PCT/EP1998/006413
(87) Internationale Veröffentlichungsnummer: WO 1999/021239

(56) Entgegenhaltungen:
- EP-A- 0 309 337
- EP-A- 0 476 765
- EP-A- 0 672 765
- DE-C- 4 443 701
- US-A- 4 407 905
- US-A- 5 294 232
- CHEMICAL ABSTRACTS, vol. 107, no. 12, 21. September 1987 Columbus, Ohio, US; abstract no. 104995, FUJITA, YUKO ET AL: "Manufacture of ion exchange membrane-electrode connection" XP002095061 -& PATENT ABSTRACTS OF JAPAN vol. 011, no. 167 (C-425), 28. Mai 1987 & JP 61 295388 A (JAPAN STORAGE BATTERY CO LTD), 26. Dezember 1986 & JP 61 295388 A (JAPAN STORAGE BATTERY CO., LTD., JAPAN)
- PATENT ABSTRACTS OF JAPAN vol. 006, no. 040 (C-094), 12. März 1982 & JP 56 155645 A (HITACHI LTD), 1. Dezember 1981
- PATENT ABSTRACTS OF JAPAN vol. 017, no. 593 (E-1454), 28. Oktober 1993 & JP 05 182672 A (MATSUSHITA ELECTRIC IND CO LTD), 23. Juli 1993

## Beschreibung

Polymerstabilisierte Metallkolloid-Lösungen, Verfahren zu ihrer Herstellung und ihre Verwendung als Katalysatoren für Brennstoffzellen

Gegenstand der Erfindung sind Metallkolloid-Lösungen, welche eine oder mehrere Platinverbindungen und gegebenenfalls eine oder mehrere Verbindungen von Rh, Ru, Ir oder Pd enthalten und durch polymere Schutzkolloide stabilisiert sind, sowie ein Verfahren zu ihrer Herstellung und ihre Verwendung für Katalysatoren, insbesondere in Brennstoffzellen.

Die Herstellung von Heterogenkatalysatoren, deren aktive Zentren aus einem Metall, insbesondere einem Edelmetall bestehen, für chemische und elektrochemische Prozesse auf der Basis eines Sol-Prozesses ist bekannt. Dabei erzeugt man zunächst ein Sol des betreffenden, katalytisch aktiven Metalls oder gegebenenfalls mehrerer Metalle in einer separaten Verfahrensstufe und immobilisiert anschließend die gelösten bzw. solubilisierten Nanopartikel auf dem Träger. Allgemeine Beschreibungen dieser Methode finden sich zum Beispiel in (a) B. C. Gates, L. Guczi, H. Knözinger, Metal Clusters in Catalysis, Elsevier, Amsterdam, 1986; (b) J.S. Bradley in Clusters and Colloids, VCH, Weinheim 1994, S. 459-544 oder (c) B. C. Gates, Chem Rev. 1995, 95, 511-522.

Im allgemeinen werden die Sole unter Verwendung eines Stabilisators hergestellt, insbesondere dann, wenn man weiterverarbeitbare Sole mit einer Metallkonzentration von 0,1 % oder höher benötigt. Der Stabilisator umhüllt das Metallpartikel und verhindert das Zusammenballen der Partikel durch elektrostatische oder sterische Abstoßung. Darüber hinaus beeinflußt der Stabilisator in gewissem Grad die Löslichkeit der Partikel.

Als Stabilisatoren kommen sowohl niedermolekulare Verbindungen als auch polymere Verbindungen in Betracht.

EP-A-0 672 765 beschreibt die elektrochemische Herstellung von Platin-Hydrosolen unter Verwendung von kationischen und betainischen Stabilisatoren sowie daraus hergestellte Katalysatoren, die sich unter anderem für Brennstoffzellen eignen sollen.

JP 61 29 53 88 A beschreibt die Herstellung einer kolloidalen Lösung von Pt duch Umsetzen einer Pt[(NH₃)₅]Cl]Cl₂ und Nafion 117® enthaltenden Lösung mit einem Reduktionsmittel.

US-5, 294 232 beschreibt die Herstellung einer kolloidalen Lösung von Pt durch Umsetzen einer Platinaminchlorid und Perfluorokohlenstoffsulfonsaüre enthaltenden Lösung mit einem Reduktionsmittel.

Schalenkatatysatoren des Platins, die über ein kationisch stabilisiertes Hydrosol hergestellt werden und sich für Brennstoffzellen eignen, werden beispielsweise in DE-A-44 43 701 beschrieben. Dabei bilden die Partikel eines Edelmetalls eine bis 200 Nanometer in die Tiefe des Trägerkorns reichende Schale.

Platin-Sole, die polymere Stabilisatoren, wie z.B. Polyacrylsäure, Polyvinylalkohol oder Poly-(N-vinylpyrrolidon) enthalten, und ihre Verwendung zur Herstellung von Katalysatoren, unter anderem auch für Brennstoffzellen, sind ebenfalls beschrieben worden (J. Kiwi und M. Grätzel, J. Am. Chem. Soc. 101 (1979) 7214; N. Toshima et al., Chemistry Letters 1981 793 ). Die genannten Polymere haben außer dem Zwecke der Stabilisierung des betreffenden Sols keine funktionale Bedeutung erlangt.

Für einen niedrigen Innenwiderstand einer Membranbrennstoffzelle ist es von entscheidender Bedeutung, daß der Transport von Protonen und Elektronen innerhalb der Zelle möglichst ungehindert ablaufen kann. Jede Barriere zwischen den katalytisch aktiven Platinzentren und den Leitungswegen der Elektronen und/oder Protonen hemmt den Prozeß oder bringt ihn zum Stillstand. Als kritische Wegstrecken gelten dabei die Abschnitte zwischen den katalytisch aktiven Zentren und den Stromkollektoren bzw. der Membran, da in diesen Bereichen mehrfach Phasenübergänge stattfinden.

Eine schwierige Aufgabe besteht darin den protischen Ladungstransport durch den Kontakt zwischen den katalytisch aktiven Platinzentren und der Membran zu bewerkstelligen. Nach den im Stand der Technik bekannten Methoden arbeitet man beispielsweise das Platin/Kohlenstoff-Gemisch durch Walzen oder Pressen oberflächlich in die Membran ein. Diese Art der Kontaktierung ist jedoch schwer zu kontrollieren und es besteht die Gefahr einer zu starken Behinderung des Stofftransportes von und zu den Platinzentren. Ferner besteht die Gefahr, daß dadurch ein Teil der Platinpartikel den Kontakt zum Stromkollektor verliert.

Bei einem anderen Verfahren wird vor dem Verpressen mit der Membran eine bestimmte Menge des polymeren Kationentauschermaterials in die Platin/Kohlenstoff-Schicht eingebracht, beispielsweise indem man das Platin/Kohlenstoff-Gemisch mit einer Lösung des polymeren Kationentauschermaterials imprägniert. Dieses Verfahren besitzt den Nachteil, daß sich dabei die Oberfläche des Katalysators verringern kann oder das KohlenstoffTeilchen zu stark umhüllt und dadurch elektrisch isoliert wird.

Infolge dieser mangelhaften Kontaktierung mit dem Stromkollektor bzw. mit der Membran benötigt man mehr Platin als zur Erzielung einer bestimmten elektrischen Leistung eigentlich erforderlich wäre. In der Praxis beträgt der Platineinsatz etwa 0,5 bis 4 mg/cm² Membranfläche. Das entspricht bisher mehreren 100 g Platin für ein verkehrstüchtiges Fahrzeug mit einer Motorleistung von 40-50 kW.

Ein weiterer, wesentlicher Grund für den erhöhten Platinbedarf beruht auf dem bisher vorwiegend angewandten Herstellverfahren für das Platin/Kohlenstoff-Gemisch. Bei diesem Verfahren wird die Lösung einer reduzierbaren oder fällbaren Platinverbindung durch Tränken oder Sprühen auf den Kohlenstoff-Träger aufgebracht. Anschließend wird die Platinverbindung durch Fällung und/oder chemische Reduktion in feindisperse Platin- oder Platinoxidpartikel überführt, wobei es häufig zur Bildung von größeren Teilchen von bis zu einigen 10 bis 100 Nanometer Durchmesser kommt. Dadurch tritt eine Abschwächung der katalytischen Aktivität infolge der Verringerung der spezifischen Platinoberfläche ein. Dies läßt sich an folgendem Beispiel veranschaulichen: ein vereinfacht als Würfel gedachter Cluster, welcher aus Atomen eines Metalls mit einem angenommenen Durchmesser von 0,25 Nanometer besteht, enthält näherungsweise bei einer Kantenlänge von 1 Nanometer 87 %, bei einer Kantenlänge von 2,5 Nanometer 49 % und bei einer Kantenlänge von 10 Nanometer 0,14 % Oberflächenatome.

Es ist ferner bekannt, daß ein Platinkatalysator auf einem Kohlenstoff-Träger unter den üblichen Betriebsbedingungen, d. h. bei erhöhter Temperatur an Oberfläche verliert. Dieser Verlust beruht auf der Tatsache, daß die Platinpartikel auf der Trägeroberfläche wandern und sich mit anderen Partikeln vereinigen können, d. h. unter Ausbildung größerer Teilchen rekristallisieren. Dieser Effekt ist umso ausgeprägter je kleiner die Platinpartikel sind. Unter diesem Gesichtspunkt ist es wünschenswert, die Wanderungsgeschwindigkeit der Platinpartikel durch die Einbettung in eine polare, mit dem Kohlenstoff-Träger in verstärkter Wechselwirkung stehende Mikroumgebung herabzusetzen.

Zusammenfassend ist festzustellen, daß es für eine leistungsfähige Membranbrennstoffzelle erforderlich ist, erstens eine hohe Dispersion der katalytisch wirksamen Metallzentren zu erzielen, zweitens einen ungehinderten Transport von Edukten, Produkten sowie Protonen und Elektronen zu gewährleisten und drittens die Rekristallisation der Metallpartikel zu größeren Teilchen auf dem Kohlenstoff-Träger herabzusetzen.

Aufgabe der vorliegenden Erfindung ist es wasserlösliche, stabilisierte Metallkolloide, die ultrafeine Partikel an Platin oder Platinmetallen enthalten sowie ein Verfahren zu ihrer Herstellung bereitzustellen und die sich für Katalysatoren, insbesondere für Brennstoffzellen eignen. Bei der Verwendung solcher Metallkolloide als Katalysatoren für Membran-Elektroden-Einheiten (MEA) sollten die Platinpartikel in einem guten protonenleitenden Kontakt mit der Membran stehen und eine herabgesetzte Tendenz zur Rekristallisation zeigen.

Die vorliegende Erfindung löst diese Aufgabe und betrifft somit Katalysatoren enthaltend einen feindispersen Träger und ein Metallkolloid enthaltend eine oder mehrere Platinverbindungen und gegebenenfalls eine oder mehrere Verbindungen von Rh, Ru, Ir oder Pd, wobei die Metallkolloide durch ein Kationenaustauscherpolymer stabilisiert sind und das Kationenaustauscherpolymer ausgewählt wird aus der Gruppe: sulfonierte Polyaryletherketone, sulfonierte Polyethersulfone, sulfonierte Potyphenylensulfide, sulfonierte Acrylnitril-Butadien-Styrot-Copolymere (ABS).

Ferner betrifft die vorliegende Erfindung ein Verfahren zur Herstellung von Katalysatoren umfassend die Schritte
a) Herstellung von Metallkolloid-Lösungen durch Umsetzung einer oder mehrerer Verbindungen Platinverbindungen und gegebenenfalls einer oder mehrerer Verbindungen von Rh, Ru, Ir oder Pd mit einem Reduktionsmittel unter Verwendung von mindestens einem Kationenaustauscherpolymer zur Stabilisierung der Metallkoiloid-Lösungen
b) in Kontakt bringen der gemäß Schritt a) erhaltenen Lösung mit einem feindispersen Träger und
c) Abtrennen des Katalysators durch Abfiltrieren oder Abzentrifugieren,
wobei das Kationenaustauscherpolymer ausgewählt wird aus der Gruppe: sulfonierte Polyaryletherketone, sulfonierte Polyethersulfone, sulfonierte Potyphenylensulfide, sulfonierte Acrylnitril-Butadien-Styrol-Copolymere (ABS).

Bei der Verwendung der erfindungsgemäßen Metallkolloide als Katalysatoren, werden die ein protonenleitfähiges Polymer enthaltenden in einer Mikrostruktur umhüllten, ultrafeinen Partikel in feiner, gleichmäßiger Verteilung auf der Oberfläche oder in oberflächennahen Bereichen eines Kohlenstoff-Trägers so immobilisiert, daß die Platin-Partikel beim nachfolgenden Aufbau der MEA in einen verbesserten protonenleitenden Kontakt mit der Membran gebracht werden können und eine herabgesetzte Tendenz zur Rekristallisation zeigen.

Zur Herstellung der erfindungsgemäßen Metallkolloid-Lösungen setzt man als Ausgangsstoffe die zur Verwendung kommenden Metallverbindungen des Platins, Rhodiums, Rutheniums, Palladiums und Iridiums in Form von löslichen Verbindungen, insbesondere wasserlöslichen Salzen ein. Beispiele hierfür sind Hexachloroplatin(IV)-säure Hydrat, Hydroxy-disulfito-platinsäure, Platinnitrat, Hexachloroiridium(IV)-säure Hydrat, Palladium(II)-acetat, tridium(III)-acetylacetonat, Ruthenium(III)-acetylacetonat, Ruthenium(III)-nitrat, Rhodium(III)-chlorid Hydrat, um nur einige zu nennen. Die Metallverbindungen werden in Konzentration von etwa 0,1 bis 100 g pro Liter, vorzugsweise von 1 bis 50 g pro Liter bezogen auf das Lösemittel eingesetzt.

In einer bevorzugten Ausführungsform beträgt das Verhältnis Pt zu anderen Platinmetallen 99 bis 60 Gew.% Platin zu 1 bis 40 Gew.% Rh, Ru, Ir und/oder Pd.

Die zur Herstellung der Metallkolloid-Lösungen verwendeten Kationentauscherpolymere besitzen stark saure, leicht dissoziierbare Gruppen, beispielsweise Carbonsäuregruppen, Sulfonsäure-Gruppen oder PhosphonsäureGruppen. Charakteristisch für die verwendeten Polymere ist somit ihre, insbesondere im gequollenen Zustand auftretende Eigenschaft, daß Kationen und insbesondere Protonen in der Polymermatrix leicht beweglich sind.

Die erfindungsgemäß verwendbaren Kationentauscherpolymere werden ausgewählt aus der Gruppe: sulfonierte Polyaryletherketone, sulfonierte Polyethersulfone, sulfonierte Polyphenylensulfide, sulfonierte Acrylnitril-Butadien-Styrol-Copolymere (ABS).

Bei den zur Gruppe der sulfonierten Polyaryletherketone gehörenden Polymeren handelt es sich Phenylenreste, die über Ether- bzw. Ketogruppen verknüpft sind und die vorzugsweise in den Ether-Untereinheiten Sulfogruppen tragen. Beispiele für derartige Polymere sind die in den nachfolgenden Formeln dargestellten sulfonierten Polyetherketone (PEK) (1 ), sulfonierten Polyetheretherketone (PEEK) (2), sulfonierten Polyetherketonketone (PEKK) (3), sulfonierten Polyetheretherketonketone (PEEKK) (4) oder sulfonierten Polyetherketonetherketonketone (PEKEKK) (5):

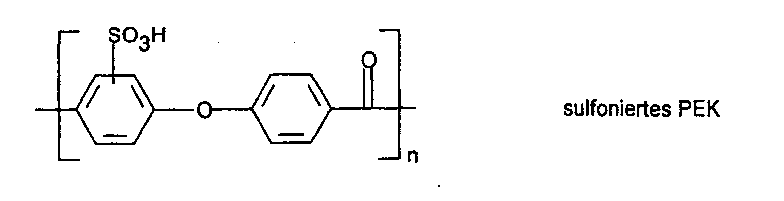

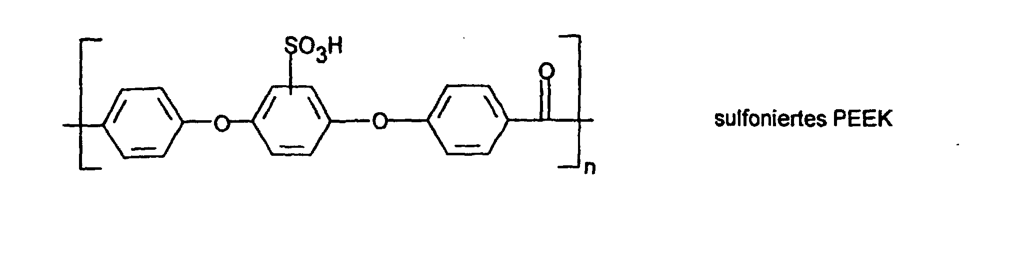

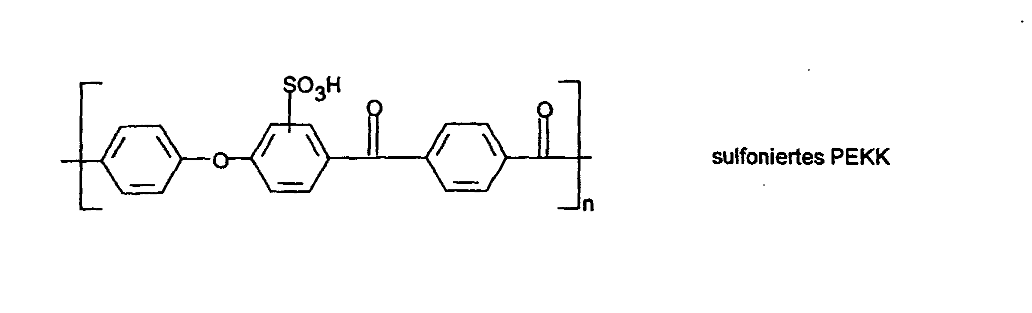

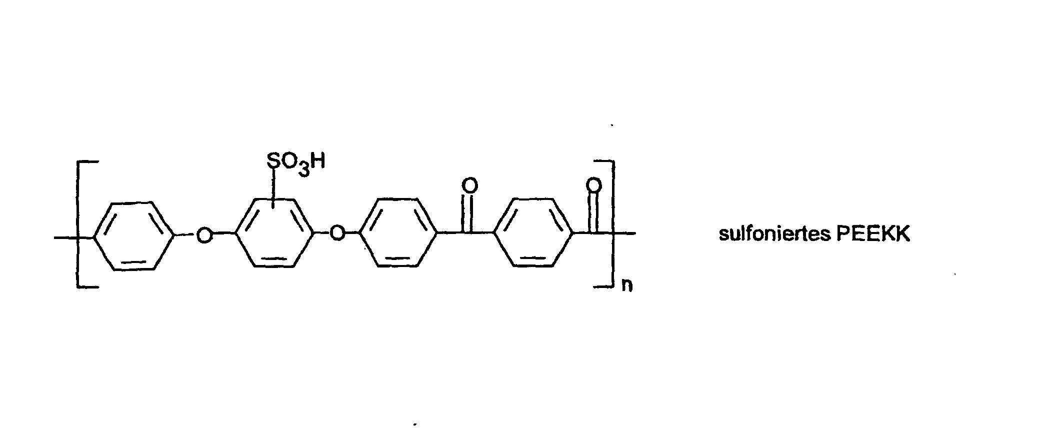

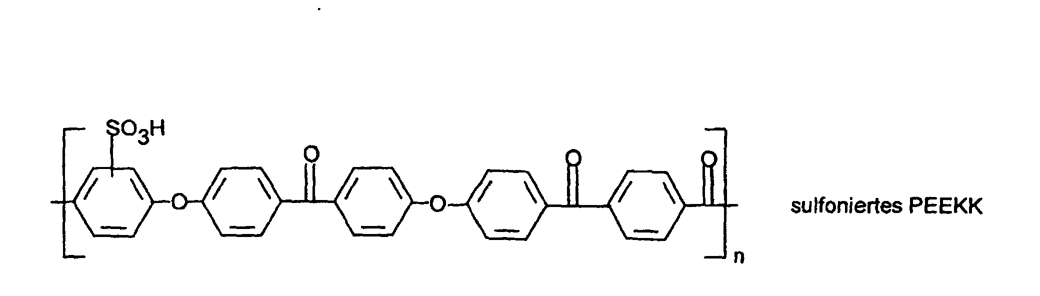

Die zugrunde liegenden, nicht sulfonierten Vorläuferpolymeren sind zum Beispiel unter den Handelsnamen Hostatect®, Victrex® oder Ultrapek® bekannt.
Bei den zur Gruppe der sulfonierten Polyarylethersulfone gehörenden Polymeren handelt es sich Phenylenreste, die über Ether- bzw. Sulfongruppen verknüpft sind und die in den Ether-Untereinheiten Sulfonsäuregruppen tragen, zum Beispiel das sulfonierte Polyethersulfon (PES) (6):

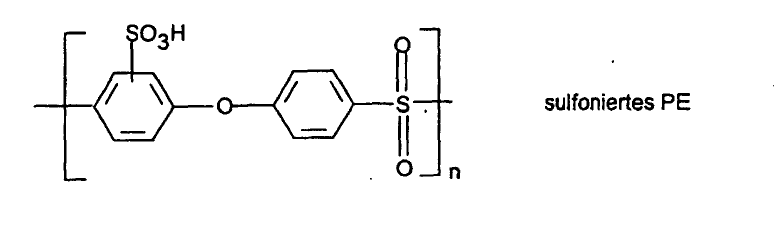

Solche Polymere gewinnt man ausgehend von nicht sulfonierten Basispolymeren, die zum Beispiel unter den Handelsnamen Polyethersulfon Victrex 200 P®, Polyethersulfon Victrex 720 P®, Polyarylsulfon Radel®, Polyethersulfon Astrel®, Polysulfon oder Udel® bekannt sind.

Die Einführung der Sulfonsäuregruppen kann nach an sich bekannten Verfahren durch Umsetzung der Basispolymeren mit Schwefelsäure, Oleum oder Chlorsulfonsäure gemäß JP-A- 043 107 732 erfolgen.

Der Grad der Sulfonierung gibt den %-Anteil der Monomereineinheiten an, welche eine Sulfonsäuregruppe tragen. Für das erfindungsgemäße Verfahren geeignete Polyetherketone oder Polyethersulfone weisen vorzugsweise einen Sulfonierungsgrad im Bereich von 20 und 95 %, insbesondere im Bereich von 40 und 85 % auf.

Zur Herstellung der Metallkolloid-Lösungen können als Schutzkolloide lösliche oder solubilisierbare Kationentauscherpolymere verwendet werden. Die Löslichkeit der Polymeren in Wasser oder niedrigen aliphatischen Alkholen, beispielsweise Methanol oder Ethanol, kann man über den Polymerisationsgrad und über die Anzahl der Säuregruppen steuern. Wäßrig-alkoholische Lösungen bzw. Sole von Nafion® sind kommerziell erhältlich.

Von sulfonierten Polyetherketonen lassen sich Lösungen in beispielsweise N-Methylpyrrolidon, Dimethylsulfoxid, Dimethylformamid oder Dimethylacetamid herstellen, die anschließend mit Wasser oder niedrigen aliphatischen Alkoholen verdünnt werden können.

Erfindungsgemäß geeignete Kationentauscherpolymere besitzen eine lonenaustauscherkapazität im Bereich von 0,5 bis 5 mÄ/g, insbesondere im Bereich von 0,8 und 3,5 mÄ/g. Bevorzugt sind im allgemeinen Polymere mit höheren lonenaustauscherkapazitäten die tendenziell eine gute Löslichkeit in Wasser und/oder polaren Lösemitteln aufweisen und ein hohes Quellvermögen besitzen.

Die Kationentauscherpolymeren werden in Gewichtsmengen von 5 bis 4000 %, vorzugsweise von 10 bis 2000 % bezogen auf den Metallanteil (Pt, Ir, Rh, Ru und Pd) eingesetzt.

Die Reduktion kann in Wasser oder in einem Gemisch aus Wasser und einem oder mehreren, mit Wasser mischbaren organischen Lösemitteln oder unter Auschluß von Wasser in einem organischen Lösemittel durchgeführt werden.

Als Lösemittel kommen zum Beispiel in Frage Methanol, Ethanol, Ethylenglykol, Tetrahydrofuran, Dimethoxyethan, Aceton, N-Methylpyrrolidon, Dimethylformamid oder Dimethylacetamid. Bevorzugt ist die Herstellung der Metallkolloid-Lösungen in Wasser (Hydrosolen) oder in Wasser unter Zusatz von 1 bis 50 Gewichts-%, vorzugsweise von 5 bis 25 % eines organischen Lösemittels.

Als Reduktionsmittel kommen alle üblichen Reduktionsmittel in Betracht, die ein ausreichend negatives Reduktionspotential aufweisen wie zum Beispiel Wasserstoff, Natriumborhydrid, ein- oder zweiwertige Alkohole, wie z.B. Ethanol, Ethylenglykol, Hydroxymethansulfinsäure Natriumsalz. Als bevorzugtes Reduktionsmittel wird Hydroxymethansulfinsäure Natriumsalz (Rongalit®) verwendet.

Das Reduktionsmittel wird im allgemeinen in stöchiometrischen Mengen bezogen auf die Metallverbindung(en), vorzugsweise aber in einem gewissen Überschuß eingesetzt. Der Überschuß kann beispielsweise 10 bis 100 mol % betragen.

Die Herstellung der Sole erfolgt vorzugsweise bei Temperaturen im Bereich 0 und 200°C, insbesondere bei 20 und 100°C. Die Komponenten können im allgemeinen in beliebiger Reihenfolge zugegeben werden. Dabei ist es zweckmäßig, die Durchmischung durch Rühren zu unterstützen. Bei der bevorzugten Durchführung wird das Reduktionsmittel als Letztes zugegeben. Falls man das Kationentauscherpolymere erst nach der Reduktion zusetzt ist, hat die Zugabe vor dem Einsetzen der Zusammenballung zu erfolgen.

Die erfindungsgemäßen löslichen Metallkolloide sind in Wasser oder einem organischen Lösemittel löslich, wobei "löslich" auch im Sinne von "solubilisierbar", d. h. Sole bildend bedeutet. Die Löslichkeit beträgt mindestens 50 g/l und liegt üblicherweise im Bereich von 50 bis 200 g/l, insbesondere im Bereich von 70 bis 150 g/l.

Die mit Kationenaustauscherpolymeren stabilisierten Metallkolloide sind neue Verbindungen von relativ einheitlicher Zusammensetzung. Auf Grund von transmissionselektronenmikroskopischen Untersuchungen (TEM) liegen die erhaltenen Partikel in einer sehr engen Größenverteilung vor. Typischerweise 90 % der Partikel weichen weniger als 20 % vom Mittelwert des Durchmessers ab. Der Durchmesser des Metallkerns hängt zu einem gewissem Grad von der Art und der Menge des eingesetzten Stabilisators ab. Er beträgt in der Regel unter 3 Nanometer, meistens unter 2 Nanometer. In vielen Fällen liegt der Durchmesser des Metallkerns bei etwa 1 Nanometer oder darunter.

Der Gesamtdurchmesser Rₕ der Partikel inklusive der Schutzkolloidhülle wurde mit Hilfe der dynamischen Lichtstreuung im Bereich von etwa 2 bis 4 Nanometer ermittelt.

Die Platin-Kationentauscherpolymer Komplexe enthalten nach dem Umfällen und Isolieren als Feststoff etwa 55-65 Gewichts-% Metall(e) (Pt, Pd, Ir, Rh, Ru).

Die erfindungsgemäßen Metallkolloide eignen sich als Katalysatoren, insbesondere für Brennstoffzellen. Hierfür wird beispielsweise ein feindisperser Träger, z.B. aus Kohlenstoff, Ruß oder Graphit mit der erfindungsgemäßen Metallkolloid-Lösung in Kontakt gebracht und der Katalysator in an sich bekannter Weise durch Abfiltrieren oder Abzentrifugieren von der flüssigen Phase abgetrennt.

Zur Herstellung des Platin/Ruß-Gemisches sind im allgemeinen Metallkonzentrationen von mindestens 10 g/Liter erwünscht. Die erfindungsgemäß erhaltenen Metallkolloid-Lösungen (Sole) können gegebenenfalls durch schonendes Abdestillieren von Wasser und/oder des Lösemittels eingeengt werden. Falls es erforderlich ist, können die erfindungsgemäß erhaltenen Sole in an sich bekannter Weise durch Umfällen gereinigt und gegebenenfalls gleichzeitig aufkonzentriert werden. Die Fällung eines kolloidal gelösten Platin-Kationentauscherpolymer-Komplexes kann durch Zugabe von Aceton oder Isopropanol erfolgen. Die erhaltenen Platin-Kationentauscherpolymer-Gele sind in wieder in Wasser löslich, wobei Metallkonzentrationen von mindestens 50 g/Liter erreicht werden.

Für die Herstellung von Katalysatoren werden die wie vorstehend beschrieben hergestellten wäßrigen Metallkolloid-Lösungen mit einem feinpulvrigen leitfähigenTrägermaterial in Kontakt gebracht und anschließend die flüssige Phase abgetrennt. Dabei erfolgt eine Immobilisierung der mit einer inhärenten, protonenleitenden Umhüllung umgebenen Platinteilchen auf dem Trägerteilchen. Es wurde gefunden, daß die erfindungsgemäßen Platin-Kationentauscherpolymer Komplexe sich dabei bevorzugt auf der Oberfläche oder in oberflächennahen Bereichen des Trägers ablagern und eine gute Haftung auf dem Träger aufweisen.

Auf diese Weise ist es möglich den Transport der Protonen zwischen den katalytischen Zentren in der Elektrodenschicht der Anode bzw. der Kathode und der Membran zu verbessern.

Der Träger besteht insbesondere aus feindispersem Kohlenstoff, Ruß oder Graphit. Bevorzugt werden spezielle, elektrisch leitfähige Kohlenstoffe (Carbon Black) verwendet, die als kommerziell verfügbar sind, beispielsweise ®Vulcan XC 72R.

Die einzusetzenden Kohlenstoff-Träger können vor oder nach der Beladung mit den erfindungsgemäßen Platin-Nanopartikeln zusätzlich mit Materialien beaufschlagt werden, zum Beispiel mit protonenleitenden Polymeren (US-A-4 876 115).

Die Beladung des Kohlenstoff-Trägers kann z.B. dadurch erfolgen, daß man zu einer Suspension des Trägers in Wasser oder einem Wasser/Alkohol-Gemisch die Metallkolloid-Lösung unter Durchmischung einträgt, die Suspension nachrührt und das Platin/Kohlenstoff-Gemisch durch Filtrieren oder Zentrifugieren isoliert.

Die erfindungsgemäß erzeugten Metallkolloid-Lösungen sind sehr stabil und enthalten Partikeln mit einem Durchmesser von typischerweise 1 Nanometer oder darunter. Dadurch wird eine außerordentlich hohe Dispersität der teuren Edelmetalle erzielt.

Die Mikroumgebung aus einem rigiden, polaren Kationentauscherpolymeren bewirkt außerdem eine gute Stabilisierung der katalytischen Zentren auf dem Träger und erschwert die Rekristallisation der Partikel auf dem Träger.

Die zur Umhüllung der katalytisch wirksamen Zentren benutzten Kationentauscherpolymeren, insbesondere die perfluorierten Kationentauscherharze besitzen eine gute Löslichkeit für die gasförmigen Brennstoffe bzw. Sauerstoff. Deshalb wird der Transport der Reaktanden an die Zentren nicht behindert.

Die Kationentauscherpolymeren zeichnen sich im allgemeinen durch ein hohes, über das Molekulargewicht und die lonenaustauscherkapazität einstellbares Quellvermögen aus. Bei Verwendung der erfindungsgemäßen Metallkolloidlösungen als Katalysatoren ist es somit möglich, den bezüglich der Anode und Kathode unterschiedlichen Wasserhaushalt der Elektroden über die Anpassung des Quellvermögens der eingesetzten Kationentauscherpolymeren zu verbessern.

### Beispiel 1

In einem 2L-Erlenmeyerkolben wurden 570 ml entsalztes Wasser, 30 g einer 5 %igen Lösung von sulfoniertem Hostatec® (Polyetherketon (PEEKK), Molekulargewicht Mₙ ca. 40 000, Hersteller: Hoechst AG, Frankfurt am Main; Sulfonierungsgrad 65 %) in N-Methylpyrrolidon und 2,50 g (ca. 5 mMol) Hexachloroplatin(IV)-säure Hydrat (Platingehalt ca.40 %) vorgelegt. Dazu wurde tropfenweise 5 %ige Ammoniaklösung hinzugefügt bis ein pH-Wert von 7,0 erreicht war. Dann wurde bei 90-95°C unter kräftigem Umrühren eine Lösung von 2,50 g (21 mmol) Hydroxymethansulfinsäure Natriumsalz (Rongalit) in 20 ml entsalztem Wasser zugegeben. Nach kurzer Aufhellung verfärbte sich die Lösung nach dunkel-rotbraun. Man ließ 15 h Raumtemperatur stehen, filtrierte das erhaltene Hydrosol über eine Glasfritte G4, versetzte das Filtrat mit 750 ml Aceton, rührte 5 min durch und ließ den ausgefallenen Niederschlag 3 h absitzen. Nach Abdekantieren der Hauptmenge des Überstandes zentrifugierte man den Rest 15 min bei 7000 Upm. Die Überstände aus Dekantieren und Zentrifugieren wurden mit 500 ml Aceton versetzt und zentrifugiert. Beide Zentrifugenrückstände wurden vereinigt und in 30 ml entsalztem Wasser gelöst, durch Zugabe von 90 ml Aceton gefällt und erneut zentrifugiert. Der erhaltene, feuchte Rückstand wurde mit Wasser zu 20 g gelöst.

Die TEM-Analyse der Partikel (Transmissionselektronenmikroskop: Philips CM 30; eine Probe des Sols wurde auf ein mit Kohlenstoff befilmtes Kupfernetz aufgebracht) ergab eine Partikelgröße von 1 Nanometer.
5,0 g des erhaltenen Hydrosols wurden eingedampft und im Vakuumexsiccator über konz. Schwefelsäure getrocknet.
Die Analyse des erhaltenen Feststoffes ergab 63 % Platin (ICP-OES) und 10,6 % Schwefel (Verbrennungsanalyse / IR-Detektion).
Das getrocknete Gel löste sich wieder in Wasser.

### Beispiel 2

In einem 2L-Erlenmeyerkolben wurden 500 ml entsalztes Wasser, 50 g einer 2 %igen Lösung von sulfoniertem Hostatec® (Polyetheretherketonketon (PEEKK), Molekulargewicht Mₙ 40 000, Hersteller: Hoechst AG, Frankfurt am Main; Sulfonierungsgrad 74,2 %) in N-Methylpyrrolidon und 2,50 g (ca. 5 mMol) Hexachloroplatin(IV)-säure Hydrat (Platingehalt ca.40 %) vorgelegt. Dazu wurde tropfenweise 5 %ige Ammoniaklösung hinzugefügt bis ein pH-Wert von 7,0 erreicht war. Dann wurde bei 90-95°C unter kräftigem Umrühren eine Lösung von 2,50 g (21 mMol) Hydroxymethansulfinsäure, Natriumsalz (Rongalit) in 20 ml entsalztem Wasser zugegeben. Nach kurzer Aufhellung verfärbte sich die Lösung nach dunkel-rotbraun. Man ließ auf Raumtemperatur abkühlen und 20 h stehen, versetzte das Sol mit 600 ml Aceton, rührte 5 min durch und ließ den ausgefallenen Niederschlag 4 h absitzen. Nach Abdekantieren der Hauptmenge des Überstandes zentrifugierte man den Rest 15 min bei 7000 Upm. Der Zentrifugenrückstand wurde in 50 ml entsalztem Wasser gelöst, durch Zugabe von 100 ml Aceton gefällt und erneut zentrifugiert. Der erhaltene, feuchte Rückstand wurde in 40 m) Wasser gelöst und nach Zusatz von 10 g N-Methylpyrrolidon auf 20 g aufkonzentriert.

Die TEM-Analyse der Partikel (Transmissionselektronenmikroskop: Philips CM 30; eine Probe des Sols wurde auf ein mit Kohlenstoff befilmtes Kupfernetz aufgebracht) ergab eine Partikelgröße von weniger als 1 Nanometer. Eine Probe des erhaltenen Sols wurde mit Aceton gefällt, zentrifugiert und im Vakuumexsiccator über konz. Schwefelsäure getrocknet.
Die Analyse des erhaltenen Feststoffes ergab 63 % Platin (ICP-OES) und 11,5 % Schwefel (Verbrennungsanalyse / IR-Detektion).
Das getrocknete Gel löste sich wieder in Wasser.

### Beispiel 3

In einem 2L-Erlenmeyerkolben wurden 500 ml entsalztes Wasser und 170 g N-Methylpyrrolidon vorgelegt. Dazu gab man 50 g einer 2 %igen Lösung von sulfoniertem Victrex® (Polyetheretherketon (PEEK), Molekulargewicht Mₙ ca. 80 000, Hersteller: ICI; Sulfonierungsgrad 50,7 %;) in N-Methylpyrrolidon und 2,50 g (ca. 5 mMol) Hexachloroplatin(IV)-säure Hydrat (Platingehalt ca.40 %) und fügte tropfenweise 5 %ige Ammoniaklösung hinzu bis ein pH-Wert von 7,0 erreicht war. Dann fügte man bei 90-95°C unter kräftigem Umrühren eine Lösung von 2,50 g (21 mMol) Hydroxymethansulfinsäure, Natriumsalz (Rongalit®) in 20 ml entsalztem Wasser zu. Nach kurzer Aufhellung verfärbte sich die Lösung nach dunkel-rotbraun. Man ließ auf Raumtemperatur abkühlen und 20 h stehen, versetzte das Sol mit 600 ml Aceton, rührte 5 min durch und ließ den ausgefallenen Niederschlag 4 h absitzen. Nach Abdekantieren der Hauptmenge des Überstandes zentrifugierte man den Rest 15 min bei 7000 Upm. Der Zentrifugenrückstand wurde in 50 ml entsalztem Wasser gelöst, durch Zugabe von 100 ml Aceton gefällt und erneut zentrifugiert. Der erhaltene, feuchte Rückstand wurde in 40 ml Wasser gelöst und nach Zusatz von 10 g N-Methylpyrrolidon auf 20 g aufkonzentriert.

Die TEM-Analyse der Partikel (Transmissionselektronenmikroskop: Philips CM 30; eine Probe des Sols wurde auf ein mit Kohlenstoff befilmtes Kupfernetz aufgebracht) ergab eine Partikelgröße von weniger als 1 Nanometer. Eine Probe des erhaltenen Sols wird mit Aceton gefällt, zentrifugiert und im Vakuumexsiccator über konz. Schwefelsäure scharf getrocknet.
Die Analyse des erhaltenen Feststoffes ergab 63 % Platin (ICP-OES) und 10,9 % Schwefel (Verbrennungsanalyse / IR-Detektion).
Das getrocknete Gel löst sich wieder in Wasser.

### Vergleichsbeispiel 4

In einem 2L-Erlenmeyerkolben wurde 500 ml entsalztes Wasser vorgelegt. Dazu. gab man 50 g einer 2 %igen Lösung von Nafion® 117 in N-Methylpyrrolidon (Nafion® 117 ist eine kommerziell erhältliche perfluorierte Kationentauschermembran von E. I. DuPont de Nemours. 1,94 g Nafion® 117-Schnitzel wurden in 100 g N-Methylpyrrolidon 16 h unter Rühren auf 190-195°C erhitzt und die erhaltene Lösung unter vermindertem Druck zur Trockene eingedampft. Der Rückstand (1,0 g) wurde in 50 g N-Methylpyrrolidon gelöst) und 1,00 g (ca. 2 mMol) Hexachloroplatin(IV)-säure Hydrat (Platingehalt ca.40 %) und fügte tropfenweise 5 %ige Ammoniaklösung hinzu bis ein pH-Wert von 7 erreicht war. Dann fügte man bei 90-95°C unter kräftigem Rühren eine Lösung von 1,00 g (8,5 mMol) Hydroxymethansuffinsäure, Natriumsalz (Rongalit@) in 20 ml entsalztem Wasser zu. Nach kurzer Aufhellung verfärbte sich die Lösung nach dunkel-rotbraun. Man ließ auf Raumtemperatur abkühlen und 20 h stehen, versetzte das Hydrosol mit 600 ml Aceton, rührte 5 min durch und ließ den ausgefallenen Niederschlag 3 h absitzen. Nach Abdekantieren der Hauptmenge des Überstandes zentrifugierte man den Rest 15 min bei 7000 Upm. Der Zentrifugenrückstand wurde im Vakuumexsiccator über konz. Schwefelsäure getrocknet.
Die Analyse des erhaltenen Feststoffes ergab 66 % Platin (ICP-OES) und 10,2 % Schwefel (Verbrennungsanalyse / IR-Detektion) Das getrocknete Gel bleibt für einige Tage wasserlöslich.

### Vergleichsbeispiel 5

In einem 2L-Erlenmeyerkolben wurden 500 ml entsalztes Wasser vorgelegt. Dazu gab man 1,00 g (ca. 2 mMol) Hexachloroplatin(IV)-säure Hydrat (Platingehalt ca. 40 %) und fügte tropfenweise 5 %ige Ammoniaklösung hinzu bis ein pH-Wert von 7 erreicht war. Dann fügte man bei 90-95°C unter kräftigem Rühren 2,0 g 5 %ige Lösung von Nafion Perfluorinated lonexchange Powder in einem Gemisch aus Wasser und niedrigen aliphatischen Alkoholen (bezogen von Aldrich-Chemie GmbH & Co KG, D-89552 Steinheim) und anschließend eine Lösung von 1,00 g (8,5 mMol) Hydroxymethansulfinsäure, Natriumsalz (Rongalit®) in 20 ml entsalztem Wasser zu. Nach kurzer Aufhellung verfärbte Lösung nach dunkel-rotbraun. Man ließ auf Raumtemperatur abkühlen und 6 h stehen, versetzte das Hydrosol mit 1000 ml Aceton, rührte 5 min durch und ließ den ausgefallenen Niederschlag 15 h absitzen. Nach Abdekantieren der Hauptmenge des Überstandes zentrifugierte man den Rest 15 min bei 7000 Upm. Der Zentrifugenrückstand wurde restlos in Wasser zu 10,0 g rotbraunem Sol gelöst.
Die TEM-Analyse der Partikel (Transmissionselektronenmikroskop: Philips CM 30; eine Probe des Sols wurde auf ein mit Kohlenstoff befilmtes Kupfernetz aufgebracht) ergab eine Partikelgröße von weniger als 1 Nanometer.

### Beispiel 6

In einem 1 L-Erlenmeyerkolben wurden 500 ml entsalztes Wasser vorgelegt. Dazu gab man 2,00 g (ca. 4 mMol) Hexachloroplatin(IV)-säure Hydrat (Platingehalt ca. 40 %), 0,40 g (ca. 0,8 mMol) Hexachloriridium(IV)-säure Hydrat) und 10 g 5 %ige Lösung von sulfoniertem Victrex® (Polyetheretherketon (PEEK), Molekulargewicht Mₙ ca. 80 000, Hersteller: ICI; Sulfonierungsgrad 50,7 %;) in N-Methylpyrrolidon. Die Lösung wurde mit 5 %iger Ammoniaklösung versetzt bis ein pH-Wert von 7 erreicht war. Dann fügte man bei 95-98°C unter kräftigem Rühren eine Lösung von 1,77 g (ca. 15 mMol) Hydroxymethansulfinsäure, Natriumsalz (Rongalit®) in 20 ml entsalztem Wasser zu. Nach kurzer Aufhellung verfärbte Lösung nach dunkelbraun. Man ließ auf Raumtemperatur abkühlen und 20 h stehen, versetzte das gebildete Hydrosol in einem 4L-Becherglas mit 3500 ml Aceton, rührte 5 min durch und ließ den ausgefallenen Niederschlag 20 h absitzen. Nach Abdekantieren der Hauptmenge des Überstandes zentrifugierte man den Rest 15 min bei 7000 Upm. Der Zentrifugenrückstand wurde in 100 ml Wasser gelöst und durch Zugabe von 150 ml Aceton erneut gefällt und zentrifugiert.Der Rückstand wurde in Wasser zu 20,0 g gelöst.

### Beispiel 7

In einem 1 L-Erlenmeyerkolben wurden 500 ml entsalztes Wasser vorgelegt. Dazu gab man 2,00 g (ca. 4 mMol) Hexachloroplatin(IV)-säure Hydrat (Platingehalt ca. 40 %), 0,30 g (ca. 1 mMol) Ruthenium(III)-chlorid Hydrat) und 10 g 5 %ige Lösung von sulfoniertem Victrex® (Polyetheretherketon (PEEK), Molekulargewicht Mₙ ca. 80 000, Hersteller: ICI; Sulfonierungsgrad 50,7 %;) in N-Methylpyrrolidon. Die Lösung wurde mit 5 %iger Ammoniaklösung versetzt bis ein pH-Wert von 7 erreicht war. Dann fügte man bei 95-98°C unter kräftigem Rühren eine Lösung von 1,77 g (ca. 15 mMol) Hydroxymethansulfinsäure, Natriumsalz (Rongalit®) in 20 ml entsalztem Wasser zu. Nach kurzer Aufhellung verfärbte Lösung nach dunkelbraun Man ließ auf Raumtemperatur abkühlen und 20 h stehen, versetzte das gebildete Hydrosol in einem 4L-Becherglas mit 3000 ml Aceton, rührte 5 min durch und ließ den ausgefallenen Niederschlag 5 h absitzen. Nach Abdekantieren der Hauptmenge des Überstandes zentrifugierte man den Rest 15 min bei 7000 Upm. Der Zentrifugenrückstand wurde in 100 ml Wasser gelöst und durch Zugabe von 150 ml Aceton erneut gefällt und zentrifugiert.Der Rückstand wurde in Wasser zu 20,0 g gelöst.

### Beispiel 8

In einem mit 5 Porzellankugeln (Durchmesser 10 mm) bestückten 100ml-Rundkoben wurden 2,00 g Vulcan XC 72R (Hersteller: Cabot B.V., Rozenburg, Niederlande), 25 ml Wasser und 5 ml Methanol vorgelegt und 4 h durch Drehen bei 100 UpM am Rotationsverdampfer vermischt. Zu der erhaltenen, gleichmäßigen Suspension pumpte man im Verlauf von 0,5 h bei 20-25°C unter fortgesetztem Drehen 5,0 g Platin-Sol zu, welches gemäß Beispiel 1 mit einem Schutzkolloid aus sulfoniertem PEEKK hergestellt und mit 5 ml Wasser verdünnt wurde. Anschließend wurde die Suspension noch 3 h gedreht. Die beschichtete Kohle wurde abgenutscht (Blauband-Filter, Schleicher&Schüll) und im Vakuumexsiccator über konz. Schwefelsäure getrocknet. Die Auswaage betrug 2,24 g.
Die Analyse des erhaltenen Katalysators ergab 66 % Platin (ICP-OES) Die TEM-Analyse (Transmissionselektronenmikroskop: Philips CM 30; die Teilchen wurden auf ein mit Kohlenstoff befilmtes Kupfernetz aufgebracht) der KatalysatorTeilchen ergab eine gleichförmige Verteilung der Platinpartikel, die einen Durchmesser von etwa 1 Nanometer aufwiesen.

### Vergleichsbeispiel 9

Es wurde wie in Beispiel 8 verfahren. 2,00 g Vulcan XC 72R wurden in 20 ml Wasser und 5 ml Methanol suspendiert. Dazu wurde im Verlauf von 1h bei 20-25°C unter fortgesetztem Drehen 6,7 g Nafion-stabilisiertes Platin-Sol gepumpt, welches gemäß Beispiel 5 mit einem Schutzkolloid aus perfluoriertem Kationentauscherharz hergestellt wurde. Die Suspension wurde noch 2 h gedreht und anschließend zentrifugiert. Der Zentrifugenrückstand wurde im Vakuumexsiccator über konz. Schwefelsäure getrocknet. Die Auswaage betrug 2,20 g.
Die Analyse des erhaltenen Katalysators ergab 8,1 % Platin (ICP-OES)
Die TEM-Analyse (Transmissionselektronenmikroskop: Philips CM 30; die Teilchen wurden auf ein mit Kohlenstoff befilmtes Kupfemetz aufgebracht) der KatalysatorTeilchen ergab einen feinen Belag von Platinpartikeln, die einen Durchmesser von etwa 1-2 Nanometer aufwiesen.

### Beispiel 10

Es wurde wie in Beispiel 8 verfahren. 2,00 g Vulcan XC 72R wurden in 20 ml Wasser und 5 ml Methanol suspendiert. Dazu wurde im Verlauf von 1h bei 20-25°C unter fortgesetztem Drehen 6,7 g Platin-Sol gepumpt, welches gemäß Beispiel 3 mit einem Schutzkolloid aus sulfoniertem PEEK hergestellt wurde. Die Suspension wurde noch 2 h gedreht und anschließend zentrifugiert. Der Zentrifugenrückstand wurde im Vakuumexsiccator über konz. Schwefelsäure getrocknet. Die Auswaage betrug 2,30 g.

Die Analyse des erhaltenen Katalysators ergab 13 % Platin (ICP-OES)
Die TEM-Analyse (Transmissionselektronenmikroskop: Philips CM 30; die Teilchen wurden auf ein mit Kohlenstoff befilmtes Kupfernetz aufgebracht) der KatalysatorTeilchen ergab einen Belag von sehr feinen Platinpartikeln, deren Durchmesser max. 1 Nanometer betrug.

### Beispiel 11

Es wurde eine Immobilisierung analog Beispiel 8 durchgeführt. Als Trägermaterial wurde 2,00 g Vulcan XC 72R (Hersteller. Cabot B.V., Rozenburg, Niederlande) eingesetzt, das zuvor mit einer Lösung von sulfoniertem Hostatec® behandelt worden war. Es wurden 6,6 g (ca. 0,33 g Platin, Stabilisator: sulfoniertes Hostatec®) Sol-Konzentrat benutzt, welches gemäß Beispiel 1 hergestellt worden war. Die Auswaage betrug 1,97 g.

### Beispiel 12

Es wurde eine Immobilisierung analog Beispiel 8 durchgeführt. Als Trägermaterial wurde 2,00 g Vulcan XC 72R (Hersteller Cabot B.V., Rozenburg, Niederlande) eingesetzt, das zuvor mit einer Lösung von Polybenzimidazol behandelt worden war. Es wurden 6,6 g (ca. 0,33 g Platin, Stabilisator: sulfoniertes Victrex®) Sol-Konzentrat benutzt, welches gemäß Beispiel 3 hergestellt worden war. Die Auswaage betrug 2,06 g.

### Vergleichsbeispiel 13

Es wurde eine Immobilisierung analog Beispiel 8 durchgeführt. Als Trägermaterial wurde 2,00 g Vulcan XC 72R (Hersteller: Cabot B.V., Rozenburg, Niederlande) eingesetzt, das zuvor mit einer Lösung von Polybenzimidazol behandelt worden war. Es wurden 6,6 g (ca. 0,33 g Platin, Stabilisator: Nafion®) Sol-Konzentrat benutzt, welches gemäß Vergleichsbeispiel 5 hergestellt worden war. Die Auswaage betrug 1,68 g.

### Beispiel 14

Es wurde eine Immobilisierung analog Beispiel 8 durchgeführt. Als Trägermaterial wurde 2,00 g Vulcan XC 72R (Hersteller: Cabot B.V., Rozenburg, Niederlande) eingesetzt, das zuvor mit einer Lösung von sulfoniertem Victrex® behandelt worden war. Es wurden 6,6 g (ca. 0,33 g Platin, Stabilisator: sulfoniertem Victrex®) Sol-Konzentrat benutzt, welches gemäß Beispiel 3 hergestellt worden war. Die Auswaage betrug 2,06 g.
Die Analyse des erhaltenen Katalysators ergab 3,8 % Platin (ICP-OES).

## Patentansprüche

1. Verfahren zur Herstellung von Katalysatoren umfassend die Schritte
a) Herstellung von Metallkolloid-Lösungen durch Umsetzung einer oder mehrerer Platinverbindungen und gegebenenfalls einer oder mehrerer Verbindungen von Rh, Ru, Ir oder Pd mit einem Reduktionsmittel unter Verwendung von mindestens einem Kationenaustauscherpolymer zur Stabilisierung der Metallkolloid-Lösungen
b) in Kontakt bringen der gemäß Schritt a) erhaltenen Lösung mit einem feindispersen Träger und
c) Abtrennen des Katalysators durch Abfiltrieren oder Abzentrifugieren, **dadurch gekennzeichnet, daß** das Kationenaustauscherpolymer ausgewählt wird aus der Gruppe: sulfonierte Polyaryletherketone, sulfonierte Polyethersulfone, sulfonierte Polyphenylensulfide, sulfonierte Acrylnitril-Butadien-Styrol-Copolymere (ABS).

2. Verfahren nach Anspruch 1, **dadurch gekennzeichnet, daß** die Reduktion in Gegenwart des Kationenaustauscherpolymer erfolgt.

3. Verfahren nach Anspruch 1 oder 2, **dadurch gekennzeichnet, daß** das Kationenaustauscherpolymer nach dem Reduktionsschritt zu der Lösung gegeben wird.

4. Verfahren nach mindestens einem der Ansprüche 1 bis 3, **dadurch gekennzeichnet, daß** die Reduktion in Wasser, einem Gemisch aus Wasser und mindestens einem mit Wasser mischbaren organischen Lösemittel oder unter Ausschluß von Wasser in einem organischen Lösemittel durchgeführt wird.

5. Verfahren nach mindestens einem der Ansprüche 1 bis 4, **dadurch gekennzeichnet, daß** als Platinverbindungen wasserlösliche Verbindungen eingesetzt werden.

6. Verfahren nach mindestens einem der Ansprüche 1 bis 5, **dadurch gekennzeichnet, daß** die Konzentration der Pt-Verbindung oder der Pt- und Rh, Ir, Ru und/oder Pd-Verbindungen bezogen auf das Lösungsmittel im Bereich von 0,1 bis 100g /l Lösungsmittel liegt.

7. Verfahren nach mindestens einem der Ansprüche 1 bis 6, **dadurch gekennzeichnet, daß** das verwendete Kationenaustauscherpolymer eine fonenaustauscherkapazität im Bereich von 0,5 bis 5 mÄ / g aufweist.

8. Verfahren nach Anspruch 7, **dadurch gekennzeichnet, daß** der Sulfonierungsgrad der sulfonierten Kationenaustauscherpolymere im Bereich von 20 bis 95 % liegt.

9. Verfahren nach mindestens einem der Ansprüche 1 bis 8, **dadurch gekennzeichnet, daß** als Reduktionsmittel Natriumborhydrid, Wasserstoff, Hydroxymethansulfinsäure Natriumsalz oder ein- oder zweiwertige Alkohole eingesetzt werden.

10. Verfahren nach Anspruch 8, **dadurch gekennzeichnet, daß** als Reduktionsmittel Hydroxymethansulfinsäure Natriumsalz eingesetzt wird.

11. Verfahren nach mindestens einem der Ansprüche 1 bis 10, **dadurch gekennzeichnet, daß** die Herstellung der Metallkolloide bei Temperaturen im Bereich von 0 bis 200 °C erfolgt.

12. Verfahren nach mindestens einem der Ansprüche 1 bis 11, **dadurch gekennzeichnet, daß** die mit dem Kationenaustauscherpolymer stabilisierte Metallkolloid- Lösung in einem anschließenden Schritt gereinigt oder aufkonzentriert wird.

13. Katalysator enthaltend einen feindispersen Träger und ein gemäß Anspruch 1 erhältliches Metallkolloid enthaltend eine oder mehrere Platinverbindungen und gegebenenfalls eine oder mehrere Verbindungen von Rh, Ru, Ir oder Pd, wobei die Metallkolloide durch ein Kationenaustauscherpolymer stabilisiert sind und das Kationenaustauscherpolymer ausgewählt wird aus der Gruppe: sulfonierte Polyaryletherketone, sulfonierte Polyethersulfone, sulfonierte Polyphenyfensulfide, sulfonierte Acrylnitril-Butadien-Styrol-Copolymere (ABS).

14. Katalysator nach Anspruch 13, **dadurch gekennzeichnet, daß** die verwendeten Kationenaustauscherpolymere eine lonenaustauscherkapazität von im Bereich von 0,5 bis 5 mÄ / g aufweisen.

15. Katalysator nach mindestens einem der Ansprüche 13 oder 14, **dadurch gekennzeichnet, daß** die Metallkolloide in Wasser eine Löslichkeit von mindestens 50g/l, bezogen auf die Metallkonzentration, besitzen.

16. Katalysator nach Anspruch 13, **dadurch gekennzeichnet, daß** der feindisperse Träger Kohlenstoff, insbesondere Ruß oder Graphit enthält.

17. Verwendung der Katalysatoren nach mindestens einem der Ansprüche 13 bis 16 für Brennstoffzellen oder Elektrolysezellen.

## Claims

1. Process for the production of catalysts, comprising the following steps:
a) preparing metal colloid solutions by reacting one or more platinum compound(s) and, if desired, one or more compounds of Rh, Ru, Ir or Pd with a reducing agent, using at least one cation-exchange polymer for stabilizing the metal colloid solutions,
b) bringing the solution obtained according to step a) into contact with a finely dispersed support, and
c) separating off the catalyst by filtration or centrifugation,
**characterized in that** the cation-exchange polymer is selected from the group: sulfonated polyaryl ether ketones, sulfonated polyether sulfones, sulfonated polyphenylene sulfides and sulfonated acrylonitrile-butadiene-styrene copolymers (ABS).

2. Process according to claim 1, **characterized in that** the reduction is carried out in the presence of the cation-exchange polymer.

3. Process according to claim 1 or 2, **characterized in that** the cation-exchange polymer is added to the solution after the reduction step.

4. Process according to at least one of claims 1 to 3, **characterized in that** the reduction is carried out in water, a mixture of water and at least one water-miscible organic solvent or in the absence of water in an organic solvent.

5. Process according to at least one of claims 1 to 4, **characterized in that** the platinum compounds used are water-soluble compounds.

6. Process according to at least one of claims 1 to 5, **characterized in that** the concentration of the Pt compound or the Pt and Rh, Ir, Ru and/or Pd compounds, based on the solvent, is in the range from 0.1 to 100 g/l of solvent.

7. Process according to at least one of claims 1 to 6, **characterized in that** the cation-exchange polymer used has an ion-exchange capacity in the range from 0.5 to 5 meq/g.

8. Process according to claim 7, **characterized in that** the degree of sulfonation of the sulfonated cation-exchange polymers is in the range from 20 to 95 %.

9. Process according to at least one of claims 1 to 8, **characterized in that** the reducing agent used is sodium borohydride, hydrogen, hydroxymethanesulfinic acid sodium salt or a monohydric or dihydric alcohol.

10. Process according to claim 8, **characterized in that** the reducing agent used is hydroxymethanesulfinic acid sodium salt.

11. Process according to at least one of claims 1 to 10, **characterized in that** the preparation of the metal colloid is carried out at temperatures in the range from 0 to 200°C.

12. Process according to at least one of claims 1 to 11, **characterized in that** the metal colloid solution stabilized with the cation-exchange polymer is purified or concentrated in a subsequent step.

13. Catalyst comprising a finely dispersed support and a metal colloid obtainable according to claim 1, comprising one or more platinum compounds and, if desired, one or more compounds of Rh, Ru, Ir or Pd, wherein the metal colloids are stabilized by a cation-exchange polymer and the cation-exchange polymer is selected from the group: sulfonated polyaryl ether ketones, sulfonated polyether sulfones, sulfonated polyphenylene sulfides and sulfonated acrylonitrile-butadiene-styrene copolymers (ABS).

14. Catalyst according to claim 13, **characterized in that** the cation-exchange polymers used have an ion-exchange capacity in the range from 0.5 to 5 meq/g.

15. Catalyst according to at least one of claims 13 and 14, **characterized in that** the metal colloid has a solubility in water of at least 50 g/l, based on the metal concentration.

16. Catalyst according to claim 13, **characterized in that** the finely dispersed support comprises carbon, especially carbon black or graphite.

17. Use of the catalysts according to at least one of claims 13 to 16 for fuel cells or electrolysis cells.

## Revendications

1. Procédé de préparation de catalyseurs, comprenant les étapes de :
a) préparation de solutions colloïdales de métaux par conversion d'un ou de plusieurs composés de platine et, le cas échéant, d'un ou de plusieurs composés de Rh, Ru, Ir ou Pd avec un agent réducteur, en utilisant au moins un polymère échangeur de cations pour la stabilisation des solutions colloïdales de métaux,
b) mise en contact de la solution obtenue selon l'étape à) avec un support finement dispersé et
c) séparation du catalyseur par filtration et/ou centrifugation, **caractérisé en ce que** le polymère échangeur de cations est choisi dans le groupe : polyaryléther-cétones sulfonées, polyéthersulfones sulfonées, polyphénylènesulfures sulfonés, copolymères d'acrylonitrile - butadiène - styrène (ABS) sulfonés.

2. Procédé selon la revendication 1, **caractérisé en ce que** la réduction se fait en présence du polymère échangeur de cations.

3. Procédé selon la revendication 1 ou 2, **caractérisé en ce que** le polymère échangeur de cations est additionné à la solution après l'étape de réduction.

4. Procédé selon au moins une des revendications 1 à 3, **caractérisé en ce que** la réduction s'effectue dans l'eau, dans un mélange constitué d'eau et au moins d'un solvant organique miscible avec de l'eau ou sous exclusion d'eau dans un solvant organique.

5. Procédé selon au moins une des revendications 1 à 4, **caractérisé en ce que** l'on utilise des composés hydrosolubles à titre de composés de platiné.

6. Procédé selon au moins une des revendications 1 à 5, **caractérisé en ce que** la concentration du composé Pt ou des composés Pt et Rh, Ir, Ru et/ou Pd, par rapport au solvant, se situe dans la plage allant de 0,1 à 100 g/l de solvant.

7. Procédé selon au moins une des revendications 1 à 6, **caractérisé en ce que** le polymère échangeur de cations utilisé présente une capacité d'échange d'ions dans la plage allant de 0,5 à 5 mÄ/g.

8. Procédé selon la revendication 7, **caractérisé en ce que** le degré de sulfonation des polymères échangeurs de cations sulfonés se situe dans la plage allant de 20 à 95 %.

9. Procédé selon l'une des revendications 1 à 8, **caractérisé en ce que** l'on utilise, à titre d'agents réducteurs, du borohydrure de sodium, de l'hydrogène, du sel sodique d'acide hydroxyméthanesulfinique ou des alcools mono- ou divalents.

10. Procédé selon la revendication 8, **caractérisé en ce que** l'on utilise, à titre d'agents réducteurs, du sel sodique d'acide hydroxyméthanesulfinique.

11. Procédé selon au moins l'une des revendications 1 à 10, **caractérisé en ce que** la préparation des colloïdes de métaux s'effectue à des températures allant de 0 à 200°C.

12. Procédé selon au moins une des revendications 1 à 11, **caractérisé en ce que** la solution colloïdale de métaux stabilisée avec le polymère échangeur de cations est purifiée ou concentrée en une étape adjointe.

13. Catalyseur contenant un support finement dispersé et un colloïde de métaux pouvant être obtenu selon la revendication 1, contenant un ou plusieurs composés de platine et, le cas échéant, un ou plusieurs composés de Rh, Ru, Ir ou Fd, où les colloïdes de métaux sont stabilisés par un polymère échangeur de cations et le polymère échangeur de cations est choisi dans le groupe : polyaryléther-cétones sulfonées, polyéthersulfones sulfonées, polyphénylène-sulfures sulfonés, copolymères d'acrylonitrile - butadiène - styrène (ABS) sulfonés.

14. Catalyseur selon la revendication 13, **caractérisé en ce que** les polymères échangeurs de cations utilisés présentent une capacité d'échange ionique allant de 0,5 à 5 mÄ/g.

15. Catalyseur selon au moins une des revendications 13 ou 14, **caractérisé en ce que** les colloïdes de métaux possèdent une solubilité dans l'eau d'au moins 50 g/l, par rapport à la concentration de métal.

16. Catalyseur selon la revendication 13, **caractérisé en ce que** le support finement dispersé contient du carbone, en particulier de la suie ou de la graphite.

17. Utilisation des catalyseurs selon au moins une des revendications 13 à 16 pour les piles à combustible ou piles à électrolyse.
